# EUROPÄISCHE PATENTSCHRIFT

(11) **EP 2 112 030 B1**
(45) Veröffentlichungstag und Bekanntmachung des Hinweises auf die Patenterteilung: **23.03.2011**
(21) Anmeldenummer: 09005559.1
(22) Anmeldetag: 21.04.2009
(51) Int. Cl.: B60R 21/06

(54) **Konisch verlaufendes Gepäck-Rückhaltenetz mit angewirktem Rand**
Conical luggage retention net with knitted edge
Filet de retenue de bagages s'étendant de façon conique doté d'un bord à effet

(30) Priorität: 25.04.2008 DE 102008020961
(43) Veröffentlichungstag der Anmeldung: 28.10.2009
(73) Patentinhaber: Natex Spitzen GmbH & Co., 6840 Götzis (AT)
(72) Erfinder: Nachbaur, Egon, 6844 Altach (AT)
(74) Vertreter: Riebling, Peter

(56) Entgegenhaltungen:
- EP-A- 1 595 738
- DE-A1-102004 030 087
- US-A- 5 660 062

## Beschreibung

Die Erfindung betrifft ein Gepäck-Rückhaltenetz nach dem Oberbegriff des Patentanspruches 1, Gepäck-Rückhaltenetze bestehen aus einem technischen Gewirk, wobei die sich überkreuzenden Kett- und Schussfäden, die im Kreuzungsbereich miteinander verbunden sind, etwa rechteckförmige oder quadratische Maschen bilden.

Eine Einrichtung nach dem Oberbegriff des Anspruchs 1 ist aus der DE10 2004 030 087 bekannt.

Sowohl die Kettfäden als auch die Schussfäden sind hierbei bevorzugt aus einem Kunststoffmaterial gefertigt, um einem solchen bekannten Gepäck-Rückhaltenetz eine gute Haltekraft und Festigkeit zu verleihen. Zweck eines solchen Gepäck-Rückhaltenetzes ist, es im aufgespannten Zustand dachseitig in einem Kraftfahrzeug an einem Haltebalken zu befestigen und bodenseitig eine in Haltewelle anzubringen, die federvorgespannt gelagert ist und auf der das Rückhaltenetz aufwickelbar ist

Das aufgespannte Gepäck-Rückhaltenetz wird deshalb mit seinem dachseitigen Griffbalken an eine entsprechende Befestigungsfläche im Dachbereich des Kraftfahrzeuges festgelegt.

Soll nun das bekannte Gepäck-Rückhaltenetz auf einer bodenseitigen Wickelwelle aufgewickelt werden, dann ist es ferner bekannt, die Seiten dieses bekannten Rückhaltenetzes mit einer umgebüggten (um die seitliche Stirnkante umgeschlagene und dort festgelegte) Folie oder Gewebe zu verstärken, um die randseitigen Kett- und Schussfäden zu binden und vor dem Ausreissen zu schützen. Mit der Anbringung einer solchen Randverstärkung aus einem umgebüggten Gewebe oder einer Folie besteht jedoch der Nachteil, dass der stirnseitige Rand relativ dick aufträgt, weil dort praktisch eine doppelte Gewebestärke im Vergleich zu der Dicke der Schuss- und Kettfäden im Mittenbereich vorhanden ist. Damit bestand wiederum der Nachteil, dass ein dergestalt verstärkter und angenähter Rand zu einem unerwünscht hohen Wickelkörper auf der bodenseitigen Wickelwelle führte.

Überdies bestand der Nachteil, dass durch das nachträgliche Anbringen einer randseitigen Verstärkung ein hoher Arbeitsaufwand bei der Herstellung eines solchen Rückhaltenetzes entsteht und darüber hinaus die Festigkeit nicht optimal ist.

Der Erfindung liegt deshalb die Aufgabe zugrunde, ein Rückhaltenetz der eingangs genannten Art so weiterzubilden, dass bei wesentlich dünnerem Rand eine bessere - einen niedrigeren Aufbau erwirkende - Aufwicklung des gesamten Rückhaltenetzes auf eine Wickelwelle gegeben ist.

Diese Aufgabe wird erfindungsgemäß durch die Merkmale des Anspruchs 1 gelöst.

Mit der gegebenen technischen Lehre ergibt sich der wesentliche Vorteil, dass nun aufgrund einer von vorne herein konischen Ausbildung des gesamten Rückhaltenetzes es nun erstmals möglich ist, auch konisch zulaufende Seitenkanten zu erreichen, was mit dem Vorteil verbunden ist, dass beim Aufwickeln von konisch zulaufenden Seitenkanten der Wickelkörper auf der Wickelwelle nicht mehr horizontal übereinander liegend aufbaut, sondern dass sich die randseitigen Verstärkungen nebeneinander liegend auf der Wickelwelle ablegen. Damit wird eine wesentlich niedrigere Wickelhöhe des auf der Wickelwelle gebildeten aufgewickelten Gepäck-Rückhaltenetzes erreicht.

Weiterer wesentlicher Vorteil der Erfindung ist, dass erfindungsgemäß der jeweilige stirnseitige Rand unmittelbar an das Mittengewebe, bestehend aus Schuss- und Kettfäden angewirkt ist.

Durch das Anwirken des Randes ergibt sich der Vorteil, dass die Gewebestärke durchgehend gleich bleibt, d. h. die Gewebestärke des Mittenbereiches setzt sich unverändert in die Gewebestärke des angewirkten Randes fort, wodurch sich keine erhöhe Dicke im Randbereich ergibt. Dass heißt, der angewirkte Rand ist in seiner Dicke genauso dick wie der Mittenbereich, so dass es nicht zu einem unerwünschten Auftrag der Randbereiche beim Aufwickeln auf die Wickelwelle kommt. Es ergibt sich damit ein homogener Wickelkörper, der über seine gesamte Breite gleich dick ausgebildet ist.

Das konische Zulaufen des angewirkten Randes (der in vertikaler Richtung eine durchgehend gleich bleibende Breite aufweist) wird dadurch erreicht, dass die Maschen des Rückhaltenetzes in der Größe verändert ausgebildet sind.

Dies wird während der Herstellung des Rückhaltenetzes erreicht, wenn dieses fertig gestellt ist und bereits die verstärkten Randbereiche angewirkt sind. Danach erfolgt eine gezielte Veränderung der Maschengröße im Mittenbereich (das ist der eigentliche Maschenbereich des Rückhaltenetzes), wobei die einzelnen Schuss- und Kettfäden beispielsweise Maschen im oberen Bereich des Rückhaltenetzes einer Größe von 10 x 10 mm bilden, und sich erfindungsgemäß die Maschengröße kontinuierlich längs einer Vertikalen von oben nach unten folgend verringert, sodass die in Bodennähe angeordneten Maschen nur mehr eine Größe von beispielsweise 9 x 9 mm haben.

Mit dem gleichen Herstellungsvorgang, mit dem der Mittenbereich als technisches Gewirk hergestellt wird, wird demzufolge auch der verstärkte und angewirkte Rand einfach dadurch hergestellt, dass in diesem Bereich Kettfäden mit höherer Dichte verlegt werden. Das heißt, dass während der Herstellung des Rückhaltenetzes im gleichen Herstellungsvorgang im Randbereich nur noch zwei Kettfäden mehr eingesetzt werden, um so im Randbereich eine Verstärkung (Erhöhung der Gewebedichte, jedoch nicht der Gewebedicke) zu erreichen.

Damit ergibt sich - wie ausgeführt - eine gleichmäßige Gewebedicke des gesamten Gewebes, welches sich somit im Mittenbereich mit gleicher Stärke in den Randbereich fortsetzt.

Mit der Herstellung eines angewirkten Randes ist ein besonders geringer Arbeitsaufwand verbunden, denn das Netz kann so in einem einzigen Arbeitsvorgang hergestellt werden.

Das Umbüggen einer zusätzlichen Folie oder eines zusätzlichen Gewebes, um einen verstärkten Rand zu erreichen, entfällt somit nach der Erfindung.

Von besonderem Vorteil ist, dass das Gepäck-Rückhaltenetz in einem einzigen Herstellverfahren hergestellt ist, welches zunächst am Ende des Herstellverfahrens ein vollkommen quadratisches oder rechteckiges Gepäcknetz erreicht.

Durch bestimmte technische Maßnahmen wird es jedoch erreicht, dass dieses Netz in einem weiteren Arbeitsvorgang konisch zugerichtet wird, was bedeutet, dass die Netzmaschen im Dachbereich lediglich nur noch eine Größe von etwa 9 x 9 mm aufweisen, während sie im Bodenbereich eine Netzweite von 10 x 10 mm aufweisen.

Die Erfindung ist selbstverständlich nicht auf die angegebenen Maße beschränkt; es können auch statt quadratischer Maschen rechteckige Maschen verwendet werden, und es können auch andere Größenabmessungen verwendet werden.

Wichtig ist nur, dass das Netz etwa um 10 bis 15 % längs einer vertikalen Linie konisch ausgebildet ist, d. h. es ist in seinem Dachbereich schmäler als vergleichsweise im Bodenbereich, um eben den sich nebeneinander (und nicht übereinander) auflegenden Wickelkörper auf der bodenseitigen Wickelwelle zu erreichen.

Es handelt sich deshalb um ein gleichschenkliges Trapez. An den beiden zueinander parallelen, horizontal verlaufenden und einen gegenseitigen Abstand zueinander aufweisenden Basisschenkeln unterschiedlicher Länge schließen sich jeweils im Winkel gleichlange (Trapez-)Schenkel an.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Draufsicht auf ein Gepäck-Rückhaltenetz in umgekehrter Raumlage (die Bodenseite ist oben gezeichnet)
- Figur 2:: das Gepäck-Rückhaltenetz in lagenrichtiger Darstellung beim Aufwickeln auf eine bodenseitige Wickelwelle eines Fahrzeuges
- Figur 3:: vergrößerte Darstellung des Randbereiches des Gewirks mit dem angewirkten Rand
- Figur 4:: Querschnitt durch den angewirkten Rand nach Figur 3

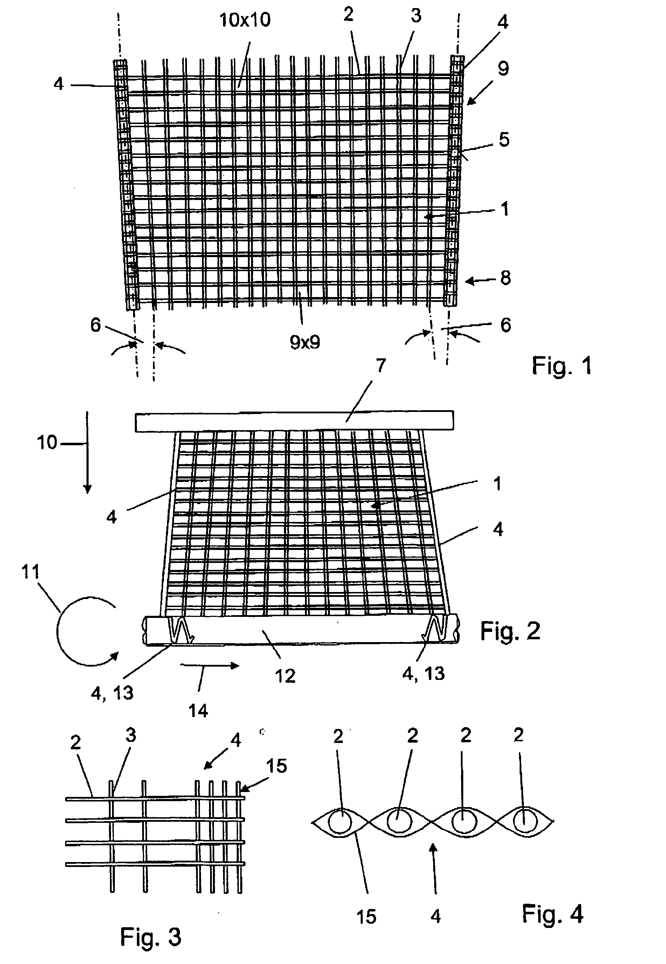

In Figur 1 ist das Gepäck-Rückhaltenetz 1 in umgekehrter Darstellung gezeigt, deshalb ist bei Position 8 der Dachbereich und bei Position 9 der Bodenbereich vorgesehen.

Es besteht aus einer Vielzahl von sich aneinander kreuzenden und im Kreuzungsbereich miteinander verbundenen Kett- und Schussfäden 2, 3, die somit ein Maschengewebe bilden, das etwa quadratische Maschen ausbildet. Die Kett- und Schussfäden bestehen bevorzugt aus einem hochfesten Kunststoffmaterial. Es ist hierbei nicht notwendig, dass die Kett- und Schussfäden aus dem gleichen Kunststoffmaterial bestehen. Ebenso kann es vorgesehen sein, dass die Kettfäden eine größere Dicke als vergleichsweise die Schussfäden aufweisen. Im Kreuzungspunkt durchdringen sich die beiden Fäden (2, 3) und bilden eine hochfeste, verschiebungssichere Masche.

Durch das vorher genannte Herstellungsverfahren ist es erreicht worden, dass beispielsweise die Maschen im Dachbereich nur noch eine Abmessung von etwa 9 x 9 mm haben, während die Maschen im Bodenbereich (bei Position 9) dann eine Abmessung von 10 x 10 mm aufweisen.

Wichtig ist, dass das ganze Gewirk mit jeweils seitlich angewirkten Rändern 4 ausgestattet ist, die unmittelbar werkstoffeinstückig aus dem Maschengewirk der Schuss- und Kettfäden 2, 3 des Mittenbereiches gebildet ist.

Aufgrund der konischen Ausbildung ergibt sich somit ein Konus 5, der einander gegenüberliegenden und gegeneinander einen Winkel 6 einnehmenden angewirkten Ränder 4, wie dies in Figur 1 dargestellt ist.
In der Draufsicht ist das erfindungsgemäße Gepäck-Rückhaltenetz deshalb trapezförmig ausgebildet.

Die Vorteile beim Aufwickeln eines solchen trapezförmigen Netzes ergeben sich aus Figur 2.

Es ist erkennbar, dass der obere, dachseitige Rand in einem Griffbalken 7 eingefasst ist und das nun trapezförmig ausgebildete Rückhaltenetz auf einer bodenseitigen Wickelwelle 12 aufgewickelt wird. Es wird somit entsprechend einem Federantrieb der Wickelwelle 12 in Pfeilrichtung 10 nach unten abgelassen, wenn sich die Wickelwelle 12 in Pfeilrichtung 11 dreht.

Der sich dann bildende Wickelkörper 13 ist aufgrund der konischen Formgebung so ausgebildet, dass sich der angewirkte Rand 4 nicht aufeinanderliegend aufbaut, sondern sich in Pfeilrichtung 14 (in Längsrichtung der Wickelwelle 12) nebeneinanderliegend aufbaut, was zu einem sehr niedrig aufbauenden Wickelkörper 13 führt.

Die Figuren 3 und 4 zeigen, dass die Dicke der randseitig verlegten Kett- und Schussfäden 15 genau gleich ist wie vergleichsweise die Dicke des Gewirks im Mittenbereich, bestehend aus den dortigen Kett- und Schussfäden 2,3.

Daraus ergibt sich der Vorteil des unmittelbar angewirkten Randes 4, weil dieser nicht in seiner Dicke über den Mittenbereich, bestehend aus den Schussfäden 2. 3 aufträgt und eine gleichbleibende Dicke gewährleistet. Durch das unmittelbare Anwirken des Randes 4 an das Gewirk der Kett- und Schussfäden 2,3 wird also ein wesentlicher Arbeitsvorgang gespart, und es wird vermieden, dass der Randbereich in seiner Dicke über den Mittenbereich, bestehend aus den dortigen Schuss- und Kettfäden 2, 3 hinaussteht.

Es handelt sich deshalb um einen vollkommen homogenen Anschluss des angewirkten Randes 4 an den Mittenbereich, bestehend aus den sich kreuzenden und miteinander verbundenen Schuss- und Kettfäden 2, 3, der damit besonders reißfest und hoch lastübertragend ist, weil er werkstoffeinstückig mit den Kett- und Schussfäden des Mittenbereiches verbunden ist.

**Zeichnungslegende**
- 1: Gepäck-Rückhaltenetz
- 2: Schussfaden
- 3: Kettfaden
- 4: Angewirkter Rand
- 5: Konus
- 6: Winkel (10°)
- 7: Griffbalken
- 8: Position (Dach)
- 9: Position (Boden)
- 10: Pfeilrichtung
- 11: Pfeilrichtung
- 12: Wickelwelle
- 13: Wickelkörper
- 14: Pfeilrichtung
- 15: Kett- und Schussfäden

## Patentansprüche

1. Gepäck-Rückhaltenetz (1) bestehend aus einem technischen Gewirk, wobei die sich überkreuzenden und im Kreuzungsbereich miteinander verbundenen Kett- und Schussfäden (3, 2) etwa rechteckförmige oder quadratische Maschen bilden, wobei das Gepäck-Rückhaltenetz (1) in der Draufsicht annähernd als gleichschenkliges Trapez ausgebildet ist wobei der jeweilige stirnseitige Rand (4) unmittelbar an das Mittengewebe, bestehend aus den Schuss- und Kettfäden (2, 3) angewirkt ist, wobei die Gewebestärke des Gepäck-Rückhaltenetzes (1) durchgehend gleich bleibt, d. h. die Gewebestärke des Mittenbereiches (2, 3) setzt sich unverändert in die Gewebestärke des angewirkten Randes (4) fort und wobei das konische Zulaufen des angewirkten Randes (4) **dadurch** gebildet ist, dass die Maschen des Rückhaltenetzes (1) in der Größe verändert ausgebildet sind, **dadurch gekennzeichnet, dass** im Bereich des angewirkten Randes (4) Kettfäden (3) mit höherer Dichte verlegt sind, um so im Randbereich (4) eine Verstärkung, d.h. eine Erhöhung der Gewebedichte, jedoch nicht der Gewebedicke, zu erreichen.

2. Gepäck-Rückhaltenetz (1) nach Anspruch 1, **dadurch gekennzeichnet, dass** die einzelnen Schuss- und Kettfäden (2, 3) Maschen im oberen Bereich (8) des Rückhaltenetzes (1) einer Größe von 9 x 9 mm bilden und in Bodennähe (9) eine Größe von 10 x 10 mm haben.

3. Gepäck-Rückhaltenetz nach einem der Ansprüche 1 oder 2, **dadurch gekennzeichnet, dass** während der Herstellung des Rückhaltenetzes im gleichen Herstellungsvorgang im Randbereich (4) zwei zusätzliche Kettfäden eingesetzt sind.

## Claims

1. Luggage retention net (1) consisting of an industrial knitted fabric, the intersecting warp and weft threads (3, 2) connected to one another in the crossing region forming approximately rectangular or square meshes, the luggage retention net (1), in plan view, being configured approximately as an isosceles trapezium and the respective end edge (4) being knitted directly onto the centre fabric, consisting of the weft and warp threads (2, 3), the fabric thickness of the luggage retention net (1) remaining continuously the same, i.e. the fabric thickness of the centre region (2, 3) is continued unchanged into the fabric thickness of the knitted-on edge (4) and the conical tapering of the knitted-on edge (4) is formed in that the meshes of the retention net (1) are changed with respect to size, **characterised in that** warp threads (3) are laid with a higher density in the region of the knitted-on edge (4) in order to thus achieve a reinforcement, i.e. an increase in the fabric density, but not in the fabric thickness, in the edge region (4).

2. Luggage retention net (1) according to claim 1, **characterised in that** the individual weft and warp threads (2, 3) form meshes in the upper region (8) of the retention net (1) with a size of 9 x 9 mm and have a size of 10 x 10 mm close to the base (9).

3. Luggage retention net according to either of claims 1 or 2, **characterised in that** two additional warp threads are inserted during the production of the retention net in the same production process in the edge region (4).

## Revendications

1. Filet de retenue de bagages (1) composé d'un tissu technique à mailles, étant précisé que les fils de chaîne et de trame (3, 2) qui se croisent et qui sont reliés entre eux dans la zone de croisement forment des mailles à peu près rectangulaires ou carrées, que le filet de retenue de bagages (1), vu de dessus, a approximativement la forme d'un trapèze isocèle, que chaque bord frontal (4) est rapporté par tissage directement sur le tissu central, composé des fils de trame et de chaîne (2, 3), que l'épaisseur de tissu du filet de retenue de bagages (1) reste constante d'un bout à l'autre, c'est-à-dire que l'épaisseur de tissu de la zone centrale (2, 3) se prolonge, inchangée, par l'épaisseur de tissu du bord rapporté par tissage (4), et que la forme conique du bord rapporté par tissage (4) est formée grâce au fait que les mailles du filet de retenue (1) ont une taille qui varie, **caractérisé en ce que** dans la zone du bord rapporté par tissage (4), des fils de chaîne (3) à densité plus élevée sont posés, afin d'obtenir ainsi dans la zone du bord (4) un renforcement, c'est-à-dire une augmentation de la densité du tissu, mais pas de l'épaisseur du tissu.

2. Filet de retenue de bagages (1) selon la revendication 1, **caractérisé en ce que** les fils de trame et de chaînes individuels (2, 3) forment des mailles d'une taille de 9x9 mm dans la zone supérieure (8) du filet de retenue (1), et d'une taille de 10x10 mm près du fond (9).

3. Filet de retenue de bagages (1) selon l'une des revendications 1 ou 2, **caractérisé en ce que** pendant la fabrication dudit filet de retenue, deux fils de chaîne supplémentaires sont insérés lors de la même opération dans la zone du bord (4).
